# EUROPEAN PATENT SPECIFICATION

(11) **EP 4 062 135 B1**
(45) Date of publication and mention of the grant of the patent: **08.01.2025**
(21) Application number: 19813144.3
(22) Date of filing: 21.11.2019
(51) Int. Cl.: G01J 1/02, G01J 5/02, G01J 5/04

(54) **DEVICE FOR PROTECTING A MEANS FOR MEASURING A PARAMETER OF A DISTANT ELEMENT, AND METHOD FOR MAKING THE DEVICE**
VORRICHTUNG ZUM SCHUTZ EINES MITTELS ZUM MESSEN EINES PARAMETERS EINES FERNEN ELEMENTS UND VERFAHREN ZUR HERSTELLUNG DER VORRICHTUNG
DISPOSITIF DE PROTECTION POUR UN MOYEN DE MESURE DE PARAMÈTRE D'UN ÉLÉMENT DISTANT, ET PROCÉDÉ DE FABRICATION DE CE DISPOSITIF

(43) Date of publication of application: 28.09.2022
(73) Proprietor: ArcelorMittal, 1160 Luxembourg (LU)
(72) Inventor: DIAZ VAQUERO, Sheila, 33393 Gijon Asturias (ES)
(74) Representative: Lavoix
(86) International application number: PCT/IB2019/060021
(87) International publication number: WO 2021/099821

(56) References cited:
- WO-A1-2018/122573
- GB-A- 1 039 955
- US-A- 4 836 689
- US-A1- 2007 251 663
- US-A1- 2008 285 132

## Description

The invention relates to a device for protecting means for measuring a parameter of a distant element.

In some technical domains, such as metallurgy, measuring devices are used for measuring a parameter of a distant element, such as a steel sheet produced by a mill or a hot strip mill. For instance, the measuring device may be a pyrometer intended for measuring the temperature of a steel sheet. When the distant element is located in an environment comprising dust particles and/or water droplets, at least the optical part of the measuring device needs to be protected, otherwise it becomes "polluted" and therefore the parameter measurements are erroneous.

To prevent the dust particles and/or the water droplets to reach the optical part, and notably its lens, this optical part may be fixed in an end part of a hollow body and a pressurized gas may be injected, with an angle typically equal to 30° and in the direction of the distant element, into the internal space delimited by this hollow body, through an inlet defined in an intermediate part.

However, despite the pressurized fluid, some dust particles and/or some water droplets still enter the hollow body and reach the optical part. Therefore the parameter measurements become rapidly erroneous, which may be questionable when they are used for permanently controlling a process, such as cooling a steel sheet at a given temperature before coiling it. In such a situation, quality defects appear on the steel sheet and maintenance operations must be done continuously, almost each day, for cleaning the optical part in order to get reliable measurements These maintenance operations are very complex and may induce damages on the optical fiber and/or lens of the measuring device (for instance a pyrometer), which are costly.

To improve the situation, it has been proposed to set a grid inside the hollow body before the optical part. But, such a solution cannot be used when the measuring device comprises a laser producing a light beam aiming at a precise area of the distant element. The holes of the grid become gradually obstructed, which prevents obtaining the parameter measurements.

It has been also proposed to add one or two shutters to the hollow body and to set the shutters in an open position each time a measure must be done. But, such a solution introduces a lot of complexity and fragility (due to the mechanical parts and control means) and increases the cost and bulkiness.

In the publication WO 2018/11573 it has been proposed a device made with an intermediate part comprising an inlet of pressurized gas in connection with circumferential holes through which the pressurized gas is blown in the direction to the distant element, thus protecting the optical part of the measuring device located upstream to the intermediate part. While such a device is simple to manufacture and more efficient than most other devices, some particles are still able to come inside and water may condense inside the device thus impairing measurement to be performed.

GB1039955A discloses a device for preserving the transparency of optical elements, when such elements are used in a contaminating atmosphere.

An objective of the invention is to improve the situation without introducing complexity and fragility while avoiding the particles and dust to come inside the device.

To this end, the invention relates notably to a device according to claim 1.

The device of the invention may also comprise the following optional characteristics considered separately or according to all possible technical combinations:
- the gas projection means are configured to project an inclined pressurized gas curtain with an angle α to the longitudinal axis X-X' of said device greater than 0° and less than 90°.
- the gas projection means consists of a curvilinear canal located in the thickness of the first bevelled edge, said curvilinear canal being longitudinally inclined in direction to the reverse bevelled edge by forming an angle α to the longitudinal axis of said piece greater than or equal to 30° and less than 90°.
- the gas projection means and the reverse bevelled edge are both configured to project the pressurized gas curtain tangentially to said reverse bevelled edge.
- the gas projection means and the reverse bevelled edge are both configured to project the pressurized gas curtain tangentially to the external border of said reverse bevelled edge.
- the first and second bevelled edges are configured on both sides of the median longitudinal plane of said protection piece.
- the reverse bevelled edge is longitudinally longer than the first bevelled edge.
- the protection piece comprises a gas diffusion space which is arranged in the thickness of the hollow body and in fluidic communication with both the pressurized gas inlet and the gas projection means.
- the pressurized gas inlet and the gas projection means are configured to project a pressurized gas curtain with a velocity comprised between 50 to 150 m.s⁻¹ taken at the exit of said gas projection means.

The invention also relates to a method for making a device as above introduced, said method being an additive manufacturing method.

The invention also relates to a computer assisted design file which comprises digital information for the implementation of the method as above introduced when loaded onto a machine.

The invention finally relates to a mill arranged for producing a metal sheet defining a distant element, wherein said mill comprises at least one protecting device as above introduced, facing said metal sheet.

Other characteristics and advantages of the invention will emerge clearly from the description of it that is given below by way of an indication and which is in no way restrictive, with reference to the appended figures in which:
- figure 1 illustrates schematically, in a perspective view, a part of a hot strip mill comprising a protecting device according to the invention, comprising the measuring means piece and the protection piece not yet coupled together;
- figure 2 illustrates schematically in a perspective view the protection piece according to a second embodiment of the invention; and
- figure 3 illustrates schematically in a longitudinal cross section the protection piece of figure 2.

The invention concerns essentially a protecting device 1 intended for protecting means O for measuring a parameter of a distant element 2.

In the following description it will be considered as an example that the distant element 2 is a steel sheet produced by a mill 2a, and more precisely by a hot strip mill. But the invention is not limited to this type of distant element. Indeed, it concerns any type of element or piece located in a difficult environment, for instance comprising dust particles and/or water droplets and having a parameter that has to be measured by a measuring means, periodically or occasionally. So, such an element may be part of a device, apparatus or system that is different from a mill. Another example may be a coke oven.

Moreover, it will be considered in the following description, as an example, that the parameter to be measured is the temperature. So, the measuring mean to be considered is a temperature measuring mean, such as a pyrometer O. It will be considered in the following description, as an example, that the protecting device 1 according to the invention belongs to the hot strip mill 2a, and therefore is installed permanently near the distant element 2. But the protecting device 1 could be external to the hot strip mill and brought near the distant element 2 when a parameter measurement must be performed.

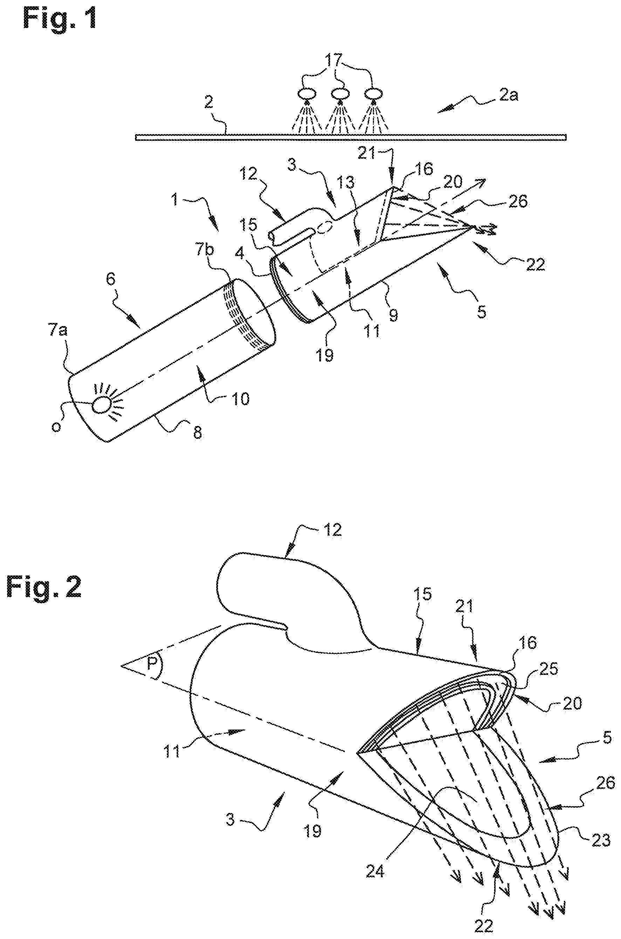

An example of embodiment of a protecting device 1 according to the invention is illustrated in figures 1 to 3. As mentioned above, in this non-limiting example the protecting device 1 belongs to a hot strip mill 2a that produces an element 2, which is a steel sheet whose temperature must be periodically measured in order to get a targeted temperature before coiling. For instance, and as illustrated in figure 1, the hot strip mill 2a comprises spraying means 17 intended for spraying water on top of the steel sheet 2 for cooling it as a function of its temperature measured by at least one protecting device 1 located under this steel sheet 2.

As illustrated in figure 1, a device 1 according to the invention comprises a protection piece 3 extending longitudinally from a first extremity 4 to an opposite free second extremity 5 intended for facing the steel sheet 2, and a coaxial measuring means piece 6 extending longitudinally from a first extremity 7a wherein an optical element of a measuring means O (here a pyrometer) is located, to an opposite second extremity 7b. The protection piece 3 and the measuring means piece 6 are coaxially coupled one to the other, for example by screwing thanks to internal and external threads respectively located at the first extremity 4 of the protection piece 3 and at the second extremity 7b of the measuring means piece 6. Both measuring means piece 6 and protection piece 3 comprise a hollow body 8,9 delimiting an internal space 10,11 in continued communication and have a circular (transversal) cross-section.

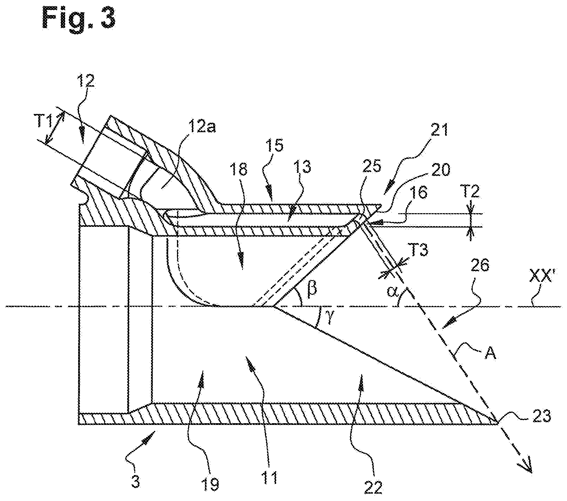

The protection piece 3 comprises a pressurized gas inlet 12 in fluidic communication via a channel 12a (figure 3) with a gas diffusion space 13 arranged in the thickness of the upper part 15 of the cylindrical wall of the hollow body 9. The gas diffusion space 13 is in fluidic communication with the gas projection means 16 located at the free extremity 5 of the protection piece 3 along an active part of the periphery 20 of said free extremity 5 and more precisely along a curvilinear canal 25 (figures 2 and 3) located in the thickness of said active part of the periphery 20. The gas projection means 16 will be more detailed in reference to figures 2 and 3.

As illustrated on figures 1, 2 and 3, the free extremity of the upper part 15 of the cylindrical wall of the hollow body 9 comprising the pressurized gas inlet 12, the gas diffusion space 13 and the gas projection means 16 is bevelled then forming a first bevelled edge 21. The free extremity of the opposite longitudinal lower part 19 is reversely bevelled then forming a reverse fulfilled bevelled edge 22. The first 21 and second 22 bevelled edges are respectfully configured on both upper and lower sides of the median longitudinal plane P of the protection piece 3 (figure 2).

Therefore, the free extremity 5 of the protection piece 3 is divided into a first bevelled edge 21 in the thickness of which the gas projection means 16 are located, and a second edge 22 configured in reverse bevel, the gas projection means 16 being therefore located opposite to said reverse bevelled edge 22. Preferably and as illustrated on Figures 1, 2 et 3, the second bevelled extremity 22 is longitudinally longer than the first bevelled extremity 21.

According to the invention, the gas projection means 16 located along a curvilinear canal 25 are configured to project an inclined pressurized gas curtain 26 delimiting a protected internal space 11 inside the hollow body 9 of the protection piece 3. For this purpose, the gas projection means 16 are configured to project an inclined pressurized gas curtain 26 with an angle α to the longitudinal axis X-X' of said device 1 greater than 0° and less than 90°. Preferably, in the configuration illustrated on figures 1, 2 and 3 such angle is greater than or equal to 30° and less than 90°. Most preferably, the gas projection means 16 and the reverse bevelled edge 22 are both configured to project the pressurized gas curtain 26 tangentially to the reverse bevelled edge 22, and especially tangentially to the external border 23 (figure 2) of said reverse bevelled edge 22.

Such a gas projection direction allows to close the free extremity 5 of the protection piece 3 with a continued curtain of pressurized gas 26, therefore avoiding particles and dust to come inside the device and to reach the lens of the optical device. Preferably, the pressurized gas is tangent to the external border 23 of said reverse bevelled edge 22 for avoiding any disturbance of the gas flow curtain that could allow particles, dirtiness and dust to come inside the device. Projected gas may be air on any other suitable gas such as inert gas.

To constraint such gas direction, the gas projection means 16 comprise a curvilinear canal 25 (figures 2 and 3) which is located in the thickness of the bevelled edge 21. The curvilinear canal 25 extends transversally along all the bevelled edge 21 and is longitudinally inclined (figure 3) in direction to the reverse bevelled edge 23. In this example, the curvilinear canal 25 (and the resulting pressurized gas curtain 26) is longitudinally inclined with an angle α of around 55° while the angle β of the first bevelled edge 21 is around 43° and the angle λ of the reverse bevelled angle 23 is around 27°. The respective values of these angles α, β, λ are adapted to the structural configuration of the free extremity 5 of the protection piece 3 and especially to the tilt and the length of the bevelled edge 23 so as to get the gas curtain 26 tangent to the reverse bevelled edge 22 and preferably to the external border 23. Such values have also to be considered in conjunction with the pyrometer orientation relative to the steel sheet. In this example, the pyrometer is located on the floor and oriented 30° pointing the steel sheet.

The velocity of the gas curtain 26 also contributes to avoid particles to come inside the device. This velocity is preferably comprised between 50 to 150 m.s⁻¹. Such a velocity is adjusted according to the velocity of the entering gas flow at the inlet 12 and to the respective thicknesses of the inlet 12, the channel 12a, the gas diffusion space 13 and the curvilinear canal 25. In this example and in reference with figure 3, the thickness T1 of the channel 12 is around 18 millimeters, the thickness T2 of the gas diffusion space 13 is around 4 millimeters, and the thickness T3 of the curvilinear canal 25 is around 3 millimeters. The entrance velocity at the gas inlet 12 is 50 m.s⁻¹, the gas velocity in the gas diffusion space 13 is comprised between 200 and 300 m.s⁻¹, and the gas velocity at the exit of the curvilinear canal 25 is 100 m.s⁻¹ falling up at about 70-80 m.s⁻¹ at the reverse bevelled edge 22.

According to the invention, the protection device 1 including the protection piece 3 and the measuring piece 6 may be produced by implementing an additive manufacturing method in three dimensions. One means here by "additive manufacturing method" a three-dimensional printing process. Such an additive manufacturing method allows to consolidate every element in a single part, which guarantees the tightness.

This additive manufacturing method may be operated with a three-dimensional (or 3D) printer, or by selective laser sintering with metal powder as raw material, or by a binder jetting method also starting with a metal powder, or else by a laser cladding technology with metal wire as raw material, for instance. The selective laser sintering is interesting in the present case because it does not require an important post-process and gives more accuracy.

For instance, the metal powder may be a powder of stainless steel 316 which allows resisting to high temperature and humidity conditions. But it could be another metal supporting the high temperature (typically 700°C) and the humidity conditions. Also for instance, it is possible to use a selective laser sintering machine such as an EOS M280 ^{®} made by EOS GmbH (Electro Optical Systems GmbH).

In order to make the device 1 according to the invention with a 3D printer, it is necessary to create a computer assisted design file comprising digital information defining all the geometrical features of this device 1 and allowing implementation of the method describe above, and then to load this computer assisted design file into a machine.

Preferably, both measuring means piece 6 and protection piece 3 can be produced by implementing an additive manufacturing method in three dimensions as described above. Alternatively, the coaxial measuring means piece 6 could be also produced by machining.

## Claims

1. Device for protecting a means for measuring a parameter of a distant element (2a), said device (1) comprising a measuring means piece (6) able to comprise at least an optical element (O), and a protection piece (3) for protecting said optical element (O), wherein said protection piece (3) comprises a hollow body (9) and extends longitudinally from a first extremity (4) coupled to the measuring means piece (6), to a second extremity (5) intended for facing said element (2a), wherein said protection piece (3) further comprises an inlet (12) of pressurized gas in fluidic communication with gas projection means (16) which are located along an active part of the periphery (20) of the second extremity (5) and configured to project an inclined pressurized gas curtain (26) delimiting a protected internal space (11) inside of the protection piece (3), wherein the hollow body (9) has a circular cross-section, **characterized in that** the second extremity (5) of the hollow body (9) is divided into a first bevelled edge (21) in the thickness of which said gas projection means (16) are located, and an opposite reverse bevelled edge (22), and and **in that** the gas projection means (16) are configured to project an inclined pressurized gas curtain (26) in the direction of said reverse bevelled edge (22).

2. Device according to claim 1, wherein the gas projection means (16) are configured to project an inclined pressurized gas curtain (26) with an angle (α) to the longitudinal axis (X-X') of said device (1) greater than 0° and less than 90°.

3. Device according to anyone of claim 1 or 2, wherein the gas projection means (16) consists of a curvilinear canal (25) located in the thickness of the first bevelled edge (21), said curvilinear canal (25) being longitudinally inclined in direction to the reverse bevelled edge (22) by forming an angle to the longitudinal axis (X-X') of said piece (3) greater than or equal to 30° and less than 90°.

4. Device according to claim 3, wherein the gas projection means (16) and the reverse bevelled edge (22) are both configured to project the pressurized gas curtain (26) tangentially to said reverse bevelled edge (22).

5. Device according to claim 4, wherein the gas projection means (16) and the reverse bevelled edge (22) are both configured to project the pressurized gas curtain (26) tangentially to the external border (23) of said reverse bevelled edge (22).

6. Device according to anyone of claims 1 to 5, wherein the first (21) and second (22) bevelled edges are configured on both sides of the median longitudinal plane (P) of said protection piece (3).

7. Device according to anyone of claims 1 to 6, wherein the reverse bevelled edge (22) is longitudinally longer than the first bevelled edge (21).

8. Device according to anyone of claims 1 to 7, wherein the protection piece (3) comprises a gas diffusion space (13) which is arranged in the thickness of the hollow body (9) and in fluidic communication with both the pressurized gas inlet (12) and the gas projection means (16).

9. Device according to anyone of the preceding claims, wherein the pressurized gas inlet (12) and the gas projection means (16) are configured to project a pressurized gas curtain (26) with a velocity comprised between 50 to 150 m.s⁻¹ taken at the exit of said gas projection means (16).

10. Method for making a device according to anyone of claims 1 to 9, said method being an additive manufacturing method.

11. Computer assisted design file which comprises digital information for the implementation of the method according to claim 10 when loaded onto a machine.

12. Mill (2a) arranged for producing a metal sheet defining a distant element (2a), wherein said mill (2a) comprises at least one protecting device according to anyone of claims 1 to 9, facing said metal sheet.

## Patentansprüche

1. Vorrichtung zum Schutz eines Messmittels für einen Parameter eines fernen Elements (2a), wobei die Vorrichtung (1) ein Messmittelstück (6), das mindestens ein optisches Element (O) umfassen kann, und ein Schutzstück (3) zum Schutz des optischen Elements (O) umfasst, wobei das Schutzstück (3) einen Hohlkörper (9) umfasst und sich in Längsrichtung von einem ersten Ende (4), das mit dem Messmittelstück (6) verbunden ist, bis zu einem zweiten Ende (5) erstreckt, das dem Element (2a) gegenüberliegen soll, wobei das Schutzstück (3) ferner einen Einlass (12) für unter Druck stehendes Gas umfasst, der in Fluidverbindung mit Gasprojektionsmittel (16) steht, das entlang eines aktiven Teils des Umfangs (20) des zweiten Endes (5) angeordnet und so konfiguriert ist, dass es einen geneigten Druckgasvorhang (26) ausstößt, der einen geschützten Innenraum (11) im Inneren des Schutzstücks (3) begrenzt, wobei der Hohlkörper (9) einen kreisförmigen Querschnitt aufweist, **dadurch gekennzeichnet, dass**
das zweite Ende (5) des Hohlkörpers (9) unterteilt ist in eine
erste abgeschrägte Kante (21), in deren Dicke sich die Gasprojektionsmittel (16) befinden, und eine gegenüberliegende umgekehrte abgeschrägte Kante (22), und dadurch, dass die Gasprojektionsmittel (16) so konfiguriert sind, dass sie einen geneigten Druckgasvorhang (26) in Richtung der umgekehrten abgeschrägten Kante (22) projizieren.

2. Vorrichtung nach Anspruch 1, wobei die Gasprojektionsmittel (16) so konfiguriert sind, dass sie einen geneigten Druckgasvorhang (26) mit einem Winkel (α) zur Längsachse (X-X') der Vorrichtung (1) projizieren, der größer als 0° und kleiner als 90° ist.

3. Vorrichtung nach einem der Ansprüche 1 oder 2, **dadurch gekennzeichnet, dass** das Gasprojektionsmittel (16) aus einem gekrümmten Kanal (25) besteht, der in der Dicke der ersten abgeschrägten Kante (21) angeordnet ist, wobei der gekrümmte Kanal (25) in Längsrichtung in Richtung der umgekehrten abgeschrägten Kante (22) geneigt ist, indem er einen Winkel zur Längsachse (X-X') des Teils (3) bildet, der größer oder gleich 30° und kleiner als 90° ist.

4. Vorrichtung nach Anspruch 3, wobei das Gasprojektionsmittel (16) und die umgekehrte abgeschrägte Kante (22) beide so konfiguriert sind, dass sie den unter Druck stehenden Gasvorhang (26) tangential zu der umgekehrten abgeschrägten Kante (22) projizieren.

5. Vorrichtung nach Anspruch 4, wobei das Gasprojektionsmittel (16) und die umgekehrte abgeschrägte Kante (22) beide so konfiguriert sind, dass sie den unter Druck stehenden Gasvorhang (26) tangential zu der äußeren Grenze (23) der umgekehrten abgeschrägten Kante (22) projizieren.

6. Vorrichtung nach einem der Ansprüche 1 bis 5, **dadurch gekennzeichnet, dass** die erste (21) und die zweite (22) abgeschrägte Kante auf beiden Seiten der mittleren Längsebene (P) des Schutzstücks (3) angeordnet sind.

7. Vorrichtung nach einem der Ansprüche 1 bis 6, wobei die umgekehrte abgeschrägte Kante (22) in Längsrichtung länger ist als die erste abgeschrägte Kante (21).

8. Vorrichtung nach einem der Ansprüche 1 bis 7, wobei das Schutzstück (3) einen Gasdiffusionsraum (13) aufweist, der in der Dicke des Hohlkörpers (9) angeordnet ist und sowohl mit dem Druckgaseinlass (12) als auch mit dem Gasprojektionsmittel (16) in Fluidverbindung steht.

9. Vorrichtung nach einem der vorhergehenden Ansprüche, wobei der Druckgaseinlass (12) und das Gasprojektionsmittel (16) so konfiguriert sind, dass sie einen Druckgasvorhang (26) mit einer Geschwindigkeit zwischen 50 und 150 m.s⁻¹ projizieren, die am Ausgang des Gasprojektionsmittels (16) gemessen wird.

10. Verfahren zur Herstellung einer Vorrichtung nach einem der Ansprüche 1 bis 9, wobei das Verfahren ein additives Herstellungsverfahren ist.

11. Computergestützte Entwurfsdatei, die digitale Informationen für die Durchführung des Verfahrens nach Anspruch 10 enthält, wenn sie auf eine Maschine geladen wird.

12. Walzwerk (2a) zur Herstellung eines Metallblechs, das ein fernes Element (2a) definiert, wobei das Walzwerk (2a) mindestens eine Schutzvorrichtung nach einem der Ansprüche 1 bis 9 aufweist, die dem Metallblech zugewandt ist.

## Revendications

1. Dispositif de protection d'un moyen de mesure d'un paramètre d'un élément distant (2a), ledit dispositif (1) comprenant une pièce de moyen de mesure (6) pouvant comporter au moins un élément optique (O), et une pièce de protection (3) pour protéger ledit élément optique (O), dans lequel ladite pièce de protection (3) comprend un corps creux (9) et s'étend longitudinalement d'une première extrémité (4) couplée à la pièce de moyen de mesure (6), à une seconde extrémité (5) destinée à faire face audit élément (2a), dans lequel ladite pièce de protection (3) comprend en outre une entrée (12) de gaz sous pression en communication fluidique avec un moyen de projection de gaz (16) qui est situé le long d'une partie active de la périphérie (20) de la seconde extrémité (5) et configuré pour projeter un rideau de gaz sous pression incliné (26) délimitant un espace interne protégé (11) à l'intérieur de la pièce de protection (3), dans lequel le corps creux (9) présente une section transversale circulaire, **caractérisé en ce que**
la seconde extrémité (5) du corps creux (9) est divisée en un
premier bord biseauté (21) dans l'épaisseur duquel se trouvent ledit moyen de projection de gaz (16), et un bord biseauté inversé opposé (22), et **en ce que** le moyen de projection de gaz (16) est configuré pour projeter un rideau de gaz sous pression incliné (26) dans la direction dudit bord biseauté inversé (22).

2. Dispositif selon la revendication 1, dans lequel le moyen de projection de gaz (16) est configuré pour projeter un rideau de gaz sous pression incliné (26) à un angle (α) par rapport à l'axe longitudinal (X-X') dudit dispositif (1) supérieur à 0° et inférieur à 90°.

3. Dispositif selon l'une quelconque des revendications 1 ou 2, dans lequel le moyen de projection de gaz (16) est constitué par un canal curviligne (25) situé dans l'épaisseur du premier bord biseauté (21), ledit canal curviligne (25) étant incliné longitudinalement en direction du bord biseauté inversé (22) en formant un angle avec l'axe longitudinal (X-X') de ladite pièce (3) supérieur ou égal à 30° et inférieur à 90°.

4. Dispositif selon la revendication 3, dans lequel le moyen de projection de gaz (16) et le bord biseauté inversé (22) sont tous deux configurés pour projeter le rideau de gaz sous pression (26) tangentiellement audit bord biseauté inversé (22).

5. Dispositif selon la revendication 4, dans lequel le moyen de projection de gaz (16) et le bord biseauté inversé (22) sont tous deux configurés pour projeter le rideau de gaz sous pression (26) tangentiellement au bord externe (23) dudit bord biseauté inversé (22).

6. Dispositif selon l'une quelconque des revendications 1 à 5, dans lequel le premier (21) et le second (22) bords biseautés sont configurés de part et d'autre du plan longitudinal médian (P) de ladite pièce de protection (3).

7. Dispositif selon l'une quelconque des revendications 1 à 6, dans lequel le bord biseauté inversé (22) est longitudinalement plus long que le premier bord biseauté (21).

8. Dispositif selon l'une quelconque des revendications 1 à 7, dans lequel la pièce de protection (3) comprend un espace de diffusion de gaz (13) qui est agencé dans l'épaisseur du corps creux (9) et en communication fluidique à la fois avec l'entrée de gaz sous pression (12) et le moyen de projection de gaz (16).

9. Dispositif selon l'une quelconque des revendications précédentes, dans lequel l'entrée de gaz sous pression (12) et le moyen de projection de gaz (16) sont configurés pour projeter un rideau de gaz sous pression (26) à une vitesse comprise entre 50 et 150 m.s⁻¹ prise à la sortie dudit moyen de projection de gaz (16).

10. Procédé de fabrication d'un dispositif selon l'une quelconque des revendications 1 à 9, ledit procédé étant un procédé de fabrication additive.

11. Fichier de conception assistée par ordinateur qui comprend des informations numériques pour la mise en œuvre du procédé selon la revendication 10 lorsqu'il est chargé sur une machine.

12. Broyeur (2a) agencé pour produire une feuille de métal définissant un élément distant (2a), dans lequel ledit broyeur (2a) comprend au moins un dispositif de protection selon l'une quelconque des revendications 1 à 9, faisant face à ladite feuille de métal.
